# EUROPÄISCHE PATENTSCHRIFT

(11) **EP 2 751 178 B1**
(45) Veröffentlichungstag und Bekanntmachung des Hinweises auf die Patenterteilung: **02.11.2016**
(21) Anmeldenummer: 12750783.8
(22) Anmeldetag: 28.08.2012
(51) Int. Cl.: C08J 9/14, C08J 9/16, C08J 9/00, C08L 25/12

(54) **EXPANDIERBARE TEMPERATURBESTÄNDIGE STYROL-COPOLYMERE**
EXPANDABLE TEMPERATURE-RESISTANT STYROLE COPOLYMERS
COPOLYMÈRES DE STYRÈNE EXTENSIBLES À TEMPÉRATURE CONSTANTE

(30) Priorität: 31.08.2011 EP 11179618
(43) Veröffentlichungstag der Anmeldung: 09.07.2014
(73) Patentinhaber: BASF SE, 67056 Ludwigshafen am Rhein (DE)
(72) Erfinder: RUCKDAESCHEL, Holger, 67487 St. Martin (DE); TERRENOIRE, Alexandre, 55576 Sprendlingen (DE); SANDLER, Jan, Kurt, Walter, 69126 Heidelberg (DE); HAHN, Klaus, 67281 Kirchheim (DE); BELLIN, Ingo, 68307 Mannheim (DE); GRAESSEL, Georg, 67063 Ludwigshafen (DE); WEBER, Martin, 67487 Maikammer (DE)
(86) Internationale Anmeldenummer: PCT/EP2012/066694
(87) Internationale Veröffentlichungsnummer: WO 2013/030197

(56) Entgegenhaltungen:
- DE-A1- 10 358 801
- DE-A1- 19 710 442
- US-A- 4 596 832
- US-A1- 2011 189 461

## Beschreibung

Die Erfindung betrifft expandierbare Granulate enthaltend temperaturbeständige StyrolCopolymere und Blends aus Styrolcopolymeren, Verfahren zu deren Herstellung, Partikelschäume und Partikelschaumformteile, erhältlich aus den expandierbaren Granulaten sowie die Verwendung der Schäume und Schaumformteile insbesondere in Windkraftanlagen.

Partikelschaumstoffe auf Basis von Styrolcopolymeren werden aufgrund ihres geringen Gewichtes und ihrer guten Isolationseigenschaften in vielen Bereichen der Technik eingesetzt (siehe z.B. WO 2005/056652 und WO 2009/000872).

In der JP-A 2010-229205 ist die Herstellung expandierbarer Granulate beschrieben, bei denen mindestens eine Komponente eine Glasübergangstemperatur von mindestens 110 °C besitzt. In den Beispielen werden Blends aus Polystyrol (PS) mit einem höherwarmformbeständigen Polymeren wie SMA oder PPE genutzt. Durch den Zusatz von PS verbessern sich die Schaumverarbeitungseigenschaften und reduzieren sich die Materialkosten. Als Herstellverfahren ist ein Schmelzeimprägnierverfahren mit Unterwassergranulierung beschrieben.

US 4,596,832 offenbart ein Verfahren zur Herstellung eines wärmeformbeständigen Schaums umfassend die Schritte: Bereitstellen eines Styrol-Maleinsäureanhydrid-Copolymers; Zufügen von 0,5 bis 5 Gew.-% eines chemischen Treibmittels, das ein Metallcarboxylat oder Metallcarbonat ist; Schmelzen und Homogenisieren; Extrudieren der treibmittelhaltigen Polymerschmelze durch eine Düse; Pelletieren und anschließendes Quenchen der vorgeschäumten Pellets in Wasser.

DE 103 58 801 A1 offenbart ein Verfahren zur Herstellung eines expandierbaren Polymergranulats.

DE 197 10 442 A1 beschreibt ein Verfahren zur Herstellung expandierbaren Styrolpolymerisate für elastische Polystyrolschäume.

Obwohl mit den bekannten Schäumen in vielen Bereichen bereits gute Ergebnisse erzielt werden, besteht doch die ständige Aufgabe, solche Materialien beispielsweise im Hinblick auf Lösemittelbeständigkeit, Temperaturbeständigkeit, mechanische Steifheit, eine geringe Wasseraufnahme und Treibmittelhaltevermögen zu verbessern. Dabei ist es gewünscht, dass Neuentwicklungen auf den vorhandenen Maschinen zur EPS- bzw. EPP-Herstellung verarbeitet werden können. Insbesondere für Bau-, Struktur- und Leichtbauanwendungen, wo eine Kombination von hoher Warmformbeständigkeit und guten mechanischen Eigenschaften erforderlich ist, besteht nach wie vor ein hoher Bedarf an geeigneten Materialien. Zudem ist beim Herstellverfahren der expandierbaren Materialien zu beachten, dass die Verweilzeiten möglichst kurz bzw. die Temperaturen möglichst gering sind, um eine Zersetzung des Materials zu vermeiden. Es wurde gefunden, dass sich Partikelschäume mit einer hohen Wärmeformbeständigkeit bei gleichzeitig hervorragenden mechanische Eigenschaften und guter Verarbeitbarkeit erhalten lassen, wenn Styrolpolymere eingesetzt werden, die einen Styrolanteil von 60-85 Gew.-% haben und eine Glasübergangstemperatur von mindestens 130 °C aufweisen, wobei die entsprechenden expandierbaren Granulate durch Schmelzimprägnierung hergestellt werden.

Gegenstand der Erfindung ist ein Verfahren zur Herstellung eines expandierbaren Polymergranulats, umfassend die Schritte
a) Bereitstellen einer Polymerkomponente (P), bestehend aus
   PS) 90 bis 99,9 Gew.-% (bezogen auf P) einer Styrolpolymerkomponente mit einer Glasübergangstemperatur ≥ 130 °C, die gebildet ist aus
   PS1) 30 bis 100 Gew.-% (bezogen auf P) an einem oder mehreren Styrolpolymeren, enthaltend
   PS11) 60 bis 85 Gew.-% (bezogen auf PS1) einpolymerisiertes Styrol (PS11) oder alpha-Methylstyrol (PS12) oder eine einpolymerisierte Mischung aus alpha-Methylstyrol und Styrol (PS13),
   PS12) 15 bis 40 Gew.-% (bezogen auf PS1) mindestens eines einpolymerisierten Monomers aus der Gruppe Maleinsäureanhydrid und Maleinimide und
   PS2) 0 bis 70 Gew.-% (bezogen auf P) an einem oder mehreren von PS1 unterschiedlichen Stryolpolymeren, enthaltend
   PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
   PS22) 18 bis 40 Gew.-% (bezogen auf PS2) einpolymerisiertes Acrylnitril und
   PT) 0,1 bis 10 Gew.-% (bezogen auf P) an einem oder mehreren thermoplastischen Polymeren aus der Gruppe bestehend aus aromatischen Polyethern; Polyolefinen; Polyacrylaten; Polycarbonaten (PC); Polyestern; Polyamiden; Polyethersulfonen (PES); Polyetherketonen (PEK) und Polyethersulfiden (PES),
(b) Erhitzen der Polymerkomponente (P) zur Ausbildung einer Polymerschmelze,
(c) Einbringen von 1 bis 5 Gew.-% (bezogen auf P) einer Treibmittelkomponente (T) in die Polymerschmelze zur Ausbildung einer schäumbaren Schmelze,
(d) Homogenisieren der Mischung,
(e) gegebenenfalls Zugabe von Additiven zu der Polymerkomponente P in mindestens einem der Schritte a), b), c) und/oder d),
(f) Extrusion der treibmittelhaltigen Polymerschmelze durch eine Düsenplatte,
(g) Granulieren der treibmitteilhaltigen Schmelze in einer flüssigkeitsgefüllten Kammer unter einem Druck von 1,5 bis 20 bar zu einem Granulat.

Die Treibmittelkomponenten (T) wird als physikalisches Treibmittel in die Schmelze eingebracht.

Weiterhin Gegenstand der Erfindung ist ein expandierbares Granulat, erhältlich nach dem erfindungsgemäßen Verfahren, dessen Partikel jeweils mindestens 10 Hohlräume pro mm³ im Größenbereich von 1 bis 200 µm enthalten und das eine Polymerkomponente (P) enthält, bestehend aus
PS) 90 bis 99,9 Gew.-% (bezogen auf P) einer Styrolpolymerkomponente mit einer Glasübergangstemperatur ≥ 130 °C, bestehend aus
PS1) 30 bis 100 Gew.-% (bezogen auf P) an einem oder mehreren Styrolpolymeren, enthaltend jeweils
PS11) 60 bis 85 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
PS12) 15 bis 40 Gew.-% (bezogen auf PS1) mindestens eines einpolymerisierten Monomers aus der Gruppe Maleinsäureanhydrid und Maleinimide und
PS2) 0 bis 70 Gew.-% (bezogen auf P) an einem oder mehreren von PS1 unterschiedlichen Stryolpolymeren, enthaltend
PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22) 18 bis 40 Gew.-% (bezogen auf PS2) einpolymerisiertes Acrylnitril und
PT) 0,1 bis 10 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES).

Ebenso Gegenstand der Erfindung ist ein Formteil, erhältlich aus dem erfindungsgemäßen Granulat, ein Verbundformkörper, enthaltend das Formteil sowie dessen Verwendung, insbesondere als Isolationsmaterial für technische Anwendungen und für den Baubereich oder als strukturelles Schaumelement für Leichtbau- und Verbundanwendungen in der Bauindustrie, in Windkraftanlagen, der Automobilindustrie, im Boots- und/oder Schiffsbau, im Möbelbau und dem Messebau.

Das erfindungsgemäße Granulat weist bevorzugt eine mittlere Partikelgröße von 0,2 bis 2,5 mm auf (analysiert durch Siebanalyse, Bestimmung der mittleren Partikelgröße durch Annahme einer RRSB-Verteilung). Bevorzugt ist dabei, dass maximal 5 Gew.-% der Partikel kleiner als 80 % der mittleren Partikelgröße und maximal 5 Gew.-% größer als 120 % der mittleren Partikelgröße sind.

Die Polymerkomponente P weist bevorzugt eine Vicat-Temperatur (gemessen nach ISO 306 VST /B50) im Bereich von mehr als 120 °C auf.

Die erfindungsgemäß als Polymerkomponente (P) eingesetzten Styrolcopolymere (PS) und die thermoplastischen Polymere (PT) können nach dem Fachmann bekannten Verfahren, beispielsweise durch radikalische, anionische oder kationische Polymerisation in Substanz, Lösung, Dispersion oder Emulsion hergestellt werden. Bevorzugt ist im Falle von P1 die Herstellung durch radikalische Polymerisation.

Die Komponente PS enthält ein oder mehrere Styrolcopolymere PS1, enthaltend, vorzugsweise bestehend aus,
PS11) 60 bis 85 Gew.-%, bevorzugt 60 bis 97 Gew.-%, besonders bevorzugt 65 bis 95 Gew.-% (bezogen auf PS1) einpolymerisiertes Styrol (P111) oder alpha-Methylstyrol (P112) oder eine einpolymerisierte Mischung aus alpha-Methylstyrol und Styrol (P113),
PS12) 15 bis 40 Gew.-%, bevorzugt 3 bis 35 Gew.-%, besonders bevorzugt 5 bis 30 Gew.-% (bezogen auf PS1) mindestens eines einpolymerisierten Monomers aus der Gruppe bestehend aus Maleinsäureanhydrid und Maleinimiden.

Bevorzugte Maleinimide sind Maleinimid selbst, N-Alkyl-substituierte Maleinimide (vorzugsweise mit C₁-C₆-Alkyl) und N-Phenyl-substituiertes Maleinimid.

In einer bevorzugten Ausführungsform enthält die Komponente (PS1) 15 bis 22 Gew.-%, vorzugsweise 15 bis 20 Gew.-%, an einem oder mehreren einpolymerisierten Comonomeren (PS12) aus der Gruppe bestehend aus Maleinsäureanhydrid und Maleinimiden.

In einer bevorzugten Ausführungsform besteht die Komponente (PS11) aus einpolymerisiertem Styrol (PS111).

In einer weiteren bevorzugten Ausführungsform besteht die Komponente (PS11) aus einpolymerisiertem alpha-Methylstyrol (PS112). In einer weiteren bevorzugten Ausführungsform besteht die Komponente (PS12) aus einer Mischung von einpolymerisiertem Styrol (PS111) und einpolymerisiertem alpha-Methylstyrol (PS113).
In einer bevorzugten Ausführungsform besteht die Komponente (PS12) aus einpolymerisiertem Maleinsäureanhydrid und/oder einpolymerisiertem N-Phenylmaleinimid.
In einer besonders bevorzugten Ausführungsform besteht die Komponente (PS1) aus einpolymerisiertem Styrol (PS111) und einpolymerisiertem Maleinsäureanhydrid oder aus einpolymerisiertem Styrol und einpolymerisiertem N-Phenylmaleinimid oder aus einpolymerisiertem Styrol (PS111), einpolymerisiertem Maleinsäureanhydrid und einpolymerisiertem N-Phenylmaleinimid.
Ganz besonders bevorzugt als Komponente (PS1) ist ein Copolymer bestehend aus 85 bis 60 Gew.-% einpolymerisiertem Styrol (PS111) und 15 bis 40 Gew.-% einpolymerisiertem Maleinsäureanhydrid.
In einer weiteren bevorzugten Ausführungsform besteht die Komponente (PS) aus einem oder mehreren, vorzugsweise einem Styrolcopolymer (PS1).

In einer weiteren Ausführungsform besteht die Komponente (PS) aus einem oder mehreren, vorzugsweise einem Styrolcopolymer (PS1) und einem oder mehreren, vorzugsweise einem, von PS1 unterschiedlichen Styrolpolymeren (PS2).
Geeignete, von (PS1) verschiedene Styrolcopolymere (als Komponente PS2) sind beispielsweise Acrylnitril-Butadien-Styrol (ABS), SAN, Acrylnitril-Styrol-Acrylester (ASA). Bevorzugt sind SAN (Styrol-Acrylnitril) Polymere. Weiterhin bevorzugt als Komponente PS2 sind Terpolymere bestehend aus Styrol, Acrylnitril und Maleinsäureanhydrid.

Die Polymerkomponente P enthält (und somit auch der Schaumstoff) 0,1 bis 10 Gew.-%, besonders bevorzugt 0,5 bis 5 Gew.-% eines thermoplastischen Polymers PT (jeweils bezogen auf P).

Als thermoplastische Polymere (PT) der Polymerkomponente (P) werden aromatische Polyether, Polyolefine, Polyacrylate, Polycarbonate (PC), Polyester, Polyamide, Polyethersulfone (PES), Polyetherketone (PEK), Polyethersulfide (PES) oder Mischungen davon eingesetzt.
Als aromatischer Polyether (PT) eignet sich z. B. Polyphenylenether (Poly(oxy-2,6-dimethyl-1,4-phenylen).

Geeignete Polyolefine (als Komponente PT) sind beispielsweise Polypropylen (PP) Polyethylen (PE) und Polybutadien.
Ein geeignetes Polyacrylat (als Komponente PT) ist beispielsweise Polymethylmethacrylat (PMMA).
Geeignete Polyester (als Komponente PT) sind beispielsweise Polyethylenterephthalat (PET) und Polybutylenterephthalat (PBT).

Geeignete Polyamide (als Komponente PT) sind beispielsweise Polyamid 6 (PA6), Polyamid 6,6, Polyamid 6i und Polyamid 6/6.6.
Bevorzugt als Komponente (PT) sind Polyacrylate.

Die Treibmittelkomponente (T) umfasst ein oder mehrere Treibmittel in einem Anteil von insgesamt 1 bis 5 Gew.-%, bevorzugt 1 bis 4 Gew.-%, besonders bevorzugt 2 bis 4 Gew.-%, bezogen auf (P). Als Treibmittel werden aliphatische Kohlenwasserstoffe mit 3 bis 8 Kohlenstoffatomen und Mischungen von 2 oder mehr solcher Kohlenwasserstoffe und/oder 2 oder mehr Isomeren solcher Kohlenwasserstoffe eingesetzt. Bevorzugt sind Butan- und Pentanisomere, wie iso-Butan, n-Butan, iso-Pentan, n-Pentan und deren Mischungen, insbesondere Pentanisomere, wie iso-Pentan und n-Pentan, und Mischungen solcher Isomere. Geeignet insbesondere als Cotreibmittel, vorzugsweise in einem Anteil von 0 bis 3 Gew.-%, bevorzugt von 0,25 bis 2,5 Gew.-%, insbesondere 0,5 bis 2,0 Gew.-% (bezogen auf (P)), sind (C₁-C₄)-Carbonylverbindungen, wie Ketone und Ester, C₁-C₄-Alkohole und C₁-C₄-Ether. Bevorzugt als Cotreibmittel sind Ketone, besonders bevorzugt Aceton.
Treibmittel wie Stickstoff und Kohlendioxid können auch durch den Zerfall chemischer Treibmittel erzeugt werden. In einer Ausführungsform der Erfindung werden daher zusätzlich 0,1 bis 5,0 Gew.-% (bezogen auf P) an einem oder mehreren Treibmitteln zugesetzt. Beispiele für solche chemischen Treibmittel sind Azodicarbonamid, Sulfohydrazide wie 4,4-Oxybis-benzolsulfonylhydrazid, p-Toluolsulfonylhydrazid, Benzazimide, p-Toluolsulfonylhydrazid, Benzazimide, p-Toluolsulfonylsemicarbazid, Dinitrosopentamethylentetramin und Phenyltetrazol.

Besonders bevorzugt besteht die Treibmittelkomponente aus einem oder mehreren Pentanisomeren und Aceton, insbesondere 2 bis 4 Gew.-% an einem oder mehreren Pentanisomeren und 0,5 bis 3 Gew.-% Aceton (wobei sich die Gew.-% auf (P) beziehen).

Durch die geringe Löslichkeit aliphatischer Kohlenwasserstoffe in den Styrolpolymeren PS1, wie SMA, SPMI und SMAPMI, können niedrige Schüttdichten bereits bei geringen Treibmittelmengen erreicht werden. Zusätzlich vorteilhaft ist die Zugabe von hydrophileren Cotreibmitteln, die eine entsprechend höhere Löslichkeit in der Polymermatrix aufweisen. Beispielsweise kann durch den Einsatz von Aceton die Verschweißung und folglich die mechanischen Eigenschaften der Formteile verbessert werden.

Die erfindungsgemäßen expandierbaren Polymergranulate weisen in der Regel eine Schüttdichte von höchstens 700 g/l, bevorzugt 300 bis 700 g/l, besonders bevorzugt im Bereich von 500 bis 660 g/l auf. Bei Verwendung von Füllstoffen können in Abhängigkeit von der Art und Menge des Füllstoffes Schüttdichten im Bereich von 500 bis 1200 g/l auftreten.

Neben Polymer- (P) und Treibmittelkomponente (T) enthält das erfindungsgemäß eingesetzte Granulat vorzugsweise eine Additivkomponente (AK). Geeignete Additive sind dem Fachmann bekannt.

In einer bevorzugten Ausführungsform wird der Polymerkomponente (P) wenigstens ein Nukleierungsmittel zugesetzt. Als Nukleierungsmittel können z.B. feinteilige, anorganische Feststoffe wie Talkum, Siliziumdioxid, Mika, Ton, Zeolithe, Calziumcarbonat und/oder Polyethylenwachse eingesetzt werden in Mengen von im Allgemeinen 0,1 bis 10 Gew.-%, bevorzugt 0,1 bis 3 Gew.-%, besonders bevorzugt 0,1 bis 1,5 Gew.-%, bezogen auf (P), eingesetzt werden. Der mittlere Teilchendurchmesser des Nukleierungsmittels liegt in der Regel im Bereich von 0,01 bis 100 µm, bevorzugt 1 bis 60 µm. Ein besonders bevorzugtes Nukleierungsmittel ist Talkum, beispielsweise Talkum von der Firma Luzenac Pharma. Das Nukleierungsmittel kann nach dem Fachmann bekannten Methoden zugegeben werden.

Gewünschtenfalls können weitere Additive, wie Füllstoffe (beispielsweise mineralische Füllstoffe, wie Glasfasern), Weichmacher, Flammschutzmittel, IR-Absorber, wie Ruß, Kokse, Graphene und/oder Graphit, Aluminiumpulver und Titandioxid, lösliche und unlösliche Farbstoffe, Pigmente, UV-Stabilisatoren und/oder thermische Stabilisatoren zugegeben werden.

Ganz besonders bevorzugt wird Graphit in Mengen von im Allgemeinen 0,05 bis 25 Gew.-%, insbesondere bevorzugt in Mengen von 2 bis 8 Gew.-%, bezogen auf (P), zugegeben. Geeignete Teilchengrößen für das eingesetzte Graphit liegen im Bereich von 1 bis 50 µm, bevorzugt im Bereich von 2 bis 10 µm.

Als vorteilhaft hat sich der Einsatz von UV-Stabilisatoren erwiesen. Speziell bei den Polymeren PS1) wie SMA führt starke UV-Einstrahlung zu einer sichtbaren Vergilbung und zur chemischen Umwandlung des Materials, die mit einer signifikanten Versprödung einhergeht. Für die Wahl geeigneter UV-Stabilisatoren spielt die Reaktivität, z.B. mit SMA, eine entscheidende Rolle. Während Stabilisatoren auf Basis von Benzotriazolen wie Tinuvin 234 die UV-Beständigkeit ohne Veränderung der Verarbeitungs- und Schaumeigenschaften verbessern kann, eignen sich Stabilisatoren auf Basis sterisch gehinderter Amine wie Uvinul 4050 und Tinuvin 770 in geringerem Maße für das erfindungsgemäße Stoffsystem.

Bevorzugt enthält das erfindungsgemäße Granulat als Additiv einen UV-Stabilisator auf Basis von Benzotriazolen in Mengen im Bereich von 0,05 bis 5 Gewichtsanteilen, bevorzugt 0,1 bis 1 Gewichtsanteilen, bezogen auf 100 Gewichtsteile Polymer P.

Aufgrund der Brandschutzbestimmungen in verschiedenen Industrien werden vorzugsweise ein oder mehrere Flammschutzmittel zugegeben. Geeignete Flammschutzmittel sind beispielsweise Tetrabrombisphenol A, bromierte Polystyrol Oligomere, Tetrabrombisphenol-A-diallylether und Hexabromcyclododecan (HBCD), insbesondere die technischen Produkte, welche im Wesentlichen das α-, β- und γ-Isomer und einen Zusatz von Synergisten wie Dicumyl enthalten. Bevorzugt sind bromierte Aromaten, wie Tetrabrombisphenol A, und bromierte Styrololigomere. Als halogenfreie Flammschutzmittel eignen sich beispielsweise Blähgraphit, roter Phosphor und Phosphorverbindungen, wie Blähgraphit, roter Phosphor, Triphenylphosphat und 9,10-Dihydro-9-oxa-10-phosphaphenanthren-10-oxid.

Die Gesamtmenge an Additiven beträgt im Allgemeinen 0 bis 30 Gew.-%, vorzugsweise 0 bis 20 Gew.-%, bezogen auf das Gesamtgewicht des Extrusionsschaums.

Bevorzugt zur Wärmedämmung ist insbesondere die Zugabe von Graphit, Ruß, Koksen, Graphenen, Aluminiumpulver oder eines IR-Farbstoffs (z.B. Indoanilin-Farbstoffe, Oxonol-Farbstoffe oder Anthrachinon-Farbstoffe). Besonders bevorzugt sind Graphit und Ruß.

In der Regel werden die Farbstoffe und Pigmente in Mengen im Bereich von 0,01 bis 30, bevorzugt im Bereich von 1 bis 5 Gew.-% zugesetzt (bezogen auf P). Zur homogenen und mikrodispersen Verteilung der Pigmente in der Polymerschmelze kann es insbesondere bei polaren Pigmenten zweckmäßig sein, ein Dispergierhilfsmittel, z.B. Organosilane, Epoxygruppen-haltige Polymere oder Maleinsäureanhydrid-gepfropfte Styrolpolymere, einzusetzen. Bevorzugte Weichmacher sind Fettsäureester, Fettsäureamide und Phthalate, die in Mengen von 0,05 bis 10 Gew.-%, bezogen auf die Polymerkomponente P, eingesetzt werden können.

Zur Herstellung des erfindungsgemäßen Granulats und des daraus erhaltenen Partikelschaums wird das Treibmittel, vorzugsweise bei erhöhten Drücken, insbesondere von 20 bis 500 bar, bevorzugt bei 40 bis 280 bar, direkt in die Polymerschmelze eingemischt. Zudem kann ein bereits mit dem Treibmittel imprägniertes Polymermaterial eingesetzt werden, dass vor der Zugabe des Treibmittels entgast wird oder bevorzugt mit dem Treibmittel aufgeschmolzen in den Prozess eingebracht wird. Ein mögliches Verfahren umfasst die Stufen a) Bereitstellung der Polymere, b) Schmelzerzeugung, c) Einbringung und Mischen der Treibmittel, d) Homogenisieren, e) gegebenenfalls Zugabe von Additiven und f) Granulieren. Jede der Stufen a) bis e) kann durch die in der Kunststoffverarbeitung bekannten Apparate oder Apparatekombinationen ausgeführt werden. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Zur Einmischung der Treibmittel eignen sich statische Mischer oder dynamische Mischer, beispielsweise Extruder. Zur Einstellung der gewünschten Schmelzetemperatur kann gegebenenfalls eine Kühlung der Schmelze vorgenommen werden. Dazu eignen sich die eingesetzten Mischaggregate, separaten Kühler oder Wärmeaustauscher. Die Granulierung erfolgt durch druckbeaufschlagte Granulierung in einer flüssigkeits-, insbesondere wassergefüllten Kammer. Damit wird eine Expansion der treibmittelhaltigen Schmelze beim Düsenaustritt zumindest teilweise unterdrückt. Zum Druckaufbau für die Düsen der Granulierung kann das Mischaggregat (Extruder) an sich oder eine zusätzliches, druckaufbauendes Schmelzeaggregat eingesetzt werden. Bevorzug wird eine Zahnradpumpe eingesetzt. Zur Durchführung des Verfahrens geeignete Apparateanordnungen sind beispielsweise, ohne darauf beschränkt zu sein:
- Polymerisationsreaktor - statischer Mischer/Kühler - Zahnradpumpe - Granulator
- Polymerisationsreaktor - Schmelzeextruder - Zahnradpumpe - Granulator
- Extruder - statischer Mischer - Granulator
- Extruder - Zahnradpumpe - Granulator
- Extruder - Zahnradpumpe - statischer Mischer - Granulator
- Extruder - statischer Mischer - Zahnradpumpe - Granulator
- Extruder - Granulator.
- Extruder - statischer Mischer - Zahnradpumpe - Granulator
- Extruder - Zahnradpumpe - statischer Mischer / Wärmetauscher - Zahnradpumpe - Granulator
- Extruder - statischer Mischer - Zahnradpumpe - statischer Mischer / Wärmetauscher - Zahnradpumpe - Granulator.

Bevorzugt sind die Anordnungen:
- Extruder - Zahnradpumpe - Granulator
- Extruder - Zahnradpumpe - statischer Mischer - Granulator.

Weiterhin vorteilhaft ist die Schmelzeimprägnierung während des Extrusionsschritts durch Zugabe des Treibmittels im Extruder, wodurch Verweilzeit und thermische Belastung des Materials bei der Herstellung der Granulate deutlich vermindert werden können.

Weiterhin kann die Anordnung ein oder mehrere Seitenextruder oder Seitenbeschickungen zur Einbringung von weiteren Polymeren und Additiven, z.B. von Feststoffen oder thermisch empfindlichen Zusatzstoffen aufweisen. Zudem können flüssige Additive an jedem Ort des Verfahrens injiziert werden, bevorzugt im Bereich der statischen und dynamischen Mischaggregate.

Die treibmittelhaltige Polymerschmelze wird in der Regel mit einer Temperatur im Bereich von 150 bis 300 °C, bevorzugt 180 bis 260°C, besonders bevorzugt im Bereich von 190 bis 230 °C durch die Düsenplatte gefördert.

Die Düsenplatte wird bevorzugt auf mindestens 10 °C über der Temperatur der treibmittelhaltigen Polymerschmelze beheizt, um Polymerablagerungen in den Düsen zu verhindern und eine störungsfreie Granulierung zu gewährleisten. Bevorzugt liegt die Temperatur der Düsenplatte im Bereich von 10 bis 200°C, besonders bevorzugt 10 bis 120 °C über der Temperatur der treibmittelhaltigen Polymerschmelze

Die Extrusion durch die Düsenplatte erfolgt in eine Kammer, die mit einer Flüssigkeit, bevorzugt Wasser, gefüllt ist. Die Temperatur der Flüssigkeit liegt bevorzugt im Bereich von 20 bis 95 °C, besonders bevorzugt 40 bis 80 °C.

Um marktfähige Granulatgrößen zu erhalten, liegt der Durchmesser (D) der Düsenbohrungen am Düsenaustritt bevorzugt im Bereich von 0,2 bis 2,0 mm, besonders bevorzugt im Bereich von 0,3 bis 1,5 mm, insbesondere im Bereich von 0,3 bis 1,0 mm. Damit lassen sich auch nach Strangaufweitung Granulatgrößen unter 2,5 mm, insbesondere im Bereich 0,4 bis 1,5 mm gezielt einstellen.

Bevorzugt ist ein Verfahren zur Herstellung eines erfindungsgemäßen Granulats, umfassend die Schritte
a) Her- oder Bereitstellen einer Schmelze der Polymerkomponenten PS) und PT),
b) Einmischen von mindestens einer physikalischen Treibmittelkomponente und gegebenenfalls von Additiven, wie Wasser oder Talkum, in die Polymerschmelze mittels statischer oder dynamischer Mischer bei einer Temperatur von mindestens 150°C,
c) thermisches Homogenisieren und ggf. Kühlen der Treibmittel- und Polymerschmelze auf eine Temperatur von mindestens 120°C
d) Austrag durch eine Düsenplatte mit Bohrungen, deren Durchmesser am Düsenaustritt höchstens 1,5 mm beträgt,
e) Gegebenenfalls Zugabe von Additiven zu der Polymerkomponente P oder in mindestens einem der Schritte a), b), und/oder c),
f) Granulieren der treibmittelhaltigen Schmelze direkt hinter der Düsenplatte in einer Flüssigkeit, bevorzugt Wasser, bei einem Druck im Bereich von 1 bis 20 bar zu einem Granulat, dessen Partikel jeweils mindestens 10 Hohlräume pro mm³ im Größenbereich von 1 bis 200 µm enthalten.

Die erfindungsgemäßen Granulatpartikel weisen jeweils mindestens 10 Hohlräume pro mm³ im Größenbereich von 1 bis 200 µm auf.

Dieser Parameter kann in dem Fachmann bekannter Weise durch Einstellen der Granulierbedingungen wie Düsentemperatur, Wassertemperatur, Druck, Messerdrehzahl, Wasserdurchsatz, gegebenenfalls unter Durchführung von Routineversuchen, verwirklicht werden. Ziel ist es dabei, ein vollständiges Aufschäumen der treibmittelhaltigen Schmelze zu unterdrücken, aber eine geringfügige Expansion zuzulassen. Dabei wird bevorzugt eine große Zahl von Hohlräumen durch begrenztes Anschäumen der Partikel angestrebt. Neben den Granulierparametern kann der Prozess auch durch die Geometrie der Düsenplatte und durch die Rezeptur, insbesondere durch Wahl der Matrixpolymere, der Treibmittel und Treibmittelmengen sowie durch Additive (insbesondere Nukleierungsmittel) gesteuert werden.

Durch die angeschäumten Strukturen kann im expandierbaren, treibmittelhaltigen Granulat eine zelluläre Morphologie eingestellt werden. Die mittlere Zellgröße im Zentrum der Partikel kann dabei größer als in den Randbereichen sein, die Dichte kann in den Randbereichen der Partikel höher sein. Dadurch werden Treibmittelverluste soweit wie möglich minimiert.

Durch die angeschäumten Strukturen ist eine deutliche bessere Zellgrößenverteilung und einer Reduzierung der Zellgröße nach dem Vorschäumen erzielbar. Zudem ist die benötigte Menge an Treibmittel zum Erreichen einer minimalen Schüttdichte geringer und die Lagerstabilität des Materials verbessert. Weiterhin ist eine deutliche Verkürzung der Vorschäumzeiten bei konstantem Treibmittelgehalt und eine deutliche Reduzierung der Treibmittelmengen bei gleichbleibenden Schäumzeiten und minimalen Schaumdichten möglich. Zudem wird durch die angeschäumten Strukturen die Produkthomogenität verbessert.

In einer bevorzugten Ausführungsform sind die expandierbaren Granulate mit einer oder mehreren Beschichtungskomponenten beschichtet, wobei diese Beschichtungskomponenten gegebenenfalls an einen porenhaltigen Feststoff adsorbiert sein können.

Als Beschichtungskomponenten eignen sich beispielsweise Glycerinester, Zinkstearat und Ester der Zitronensäure.

Bevorzugt sind die Mono-, Di- und Triglyceride, die aus Glycerin und Stearinsäure, Glycerin und 12-Hydroxystearinsäure und Glycerin und Ricinolsäure erhältlich sind, sowie gemischte Di- und Triglyceride, die neben Stearinsäure, 12-Hydroxystearinsäure und Ricinolsäure aus einer oder zwei Fettsäuren aus der Gruppe Ölsäure, Linolsäure, Linolensäure und Palmitinsäure erhältlich sind.

Besonders bevorzugt sind die entsprechenden Handelsprodukte, welche im Allgemeinen Mischungen der entsprechenden Mono-, Di- und Triester darstellen, die auch geringe Anteile an freiem Glycerin und freien Fettsäuren enthalten können, wie beispielsweise Glycerintri- oder Glycerinmonostearate.

Bevorzugt als Beschichtungsmaterial sind insbesondere Weichmacher aus der Gruppe bestehend aus a) einem oder mehreren Alkylestern von Cyclohexancarbonsäuren mit einem Siedepunkt ≥ 160 °C, b) einem oder mehreren C₁₀-C₂₁-Alkansulfonsäurephenylestern mit einem Siedepunkt ≥ 150 °C und c) Mischungen der Komponenten a) und b).

Bevorzugt als Weichmacher a) sind Alkylester von Cyclohexancarbonsäuren der Formel (I), 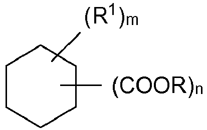 worin die Symbole und Indizes folgende Bedeutungen haben:
R¹ ist C₁-C₁₀-Alkyl oder C₃-C₈-Cycloalkyl; vorzugsweise C₁-C₁₀-Alkyl;
m ist 0, 1, 2 oder 3;
n ist 1, 2, 3 oder 4 und
R ist C₁-C₃₀-Alkyl.

Besonders bevorzugt haben die Symbole und Indizes in der Formel (I) folgende Bedeutungen:
m ist 0;
n ist 2 und
R ist C₈-C₁₀-Alkyl.

Insbesondere handelt es sich um 1,2-Cyclohexandicarbonsäurediisononylester, wie er zum Beispiel unter der Bezeichnung Hexamoll^{®} DINCH von der BASF SE (Ludwigshafen, Deutschland) vertrieben wird. Herstellung und Verwendung als Weichmacher sind beispielsweise in der WO99/32427 und der DE 20021356 beschrieben.

Weiterhin bevorzugt als Weichmacher sind Phenylester von (C₁₀-_C₂₁)-Alkylsulfonsäuren der Formel (II) (Komponente b)) 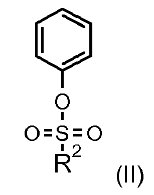 wobei
R² (C₁₀-C₂₁)-Alkyl, bevorzugt (C₁₃-C₁₇)-Alkyl, ist.

Bevorzugte Weichmacher b) sind Mischungen aus (C₁₀-C₂₁)-Alkansulfonsäurephenylestern. Besonders bevorzugt ist dabei eine Mischung, die zu 75 bis 85 % aus einem Gemisch sekundärer Alkansulfonsäurephenylester besteht und zusätzlich 15 bis 25 % sekundäre Alkandisulfonsäurediphenylester sowie 2 bis 3 % nicht sulfonierte Alkane enthält, wobei die Alkylreste überwiegend unverzweigt sind und die Kettenlängen im Bereich von 10 bis 21 hauptsächlich von 13 bis 17 Kohlenstoffatomen liegen.

Solche Gemische werden zum Beispiel unter den Mesamoll^{®} Marken von der Lanxess AG (Leverkusen, Deutschland) vertrieben.

Bevorzugt wird der erfindungsgemäß eingesetzte Weichmacher in einer Menge von 0,01 bis 1 Gew.-%, bevorzugt 0,1-0.8 Gew.-%, besonders bevorzugt 0,2-0,5 Gew.-%, auf das expandierbare Granulat aufgebracht.

Die Beschichtung kann weitere Zusatzstoffe, wie Antistatika, Hydrophobisierungsmittel, Flammschutzmittel, feinteilige Kieselsäure und anorganische Füllstoffe enthalten. Der Anteil dieser Mittel hängt von des Art und Wirkung ab und beträgt für anorganische Füllstoffe in der Regel 0 bis 1 Gew.-%, bezogen auf beschichtete Polymerpartikel.

Als Antistatika kommen beispielsweise Verbindungen wie Emulgator K30 (Gemisch aus sekundären Natriumalkansulfonaten) oder Tensid 743 in Betracht.

Die expandierbaren Granulatpartikel können zu erfindungsgemäßen Schaumstoffen mit Dichten im Bereich von 5 bis 300 kg/m³, bevorzugt 50 bis 200 kg/m³, besonders bevorzugt 70 bis 150 kg/m³ verarbeitet werden. Hierzu werden die expandierbaren Partikel vorgeschäumt. Dies geschieht zumeist durch Erwärmen mit Wasserdampf in sogenannten Vorschäumern. Die so vorgeschäumten Partikel werden danach zu Formköpern verschweißt. Hierzu werden die vorgeschäumten Partikel in nicht gasdicht schließende Formen gebracht und mit Wasserdampf beaufschlagt. Nach dem Abkühlen können die erfindungsgemäßen Formteile entnommen werden.

Erfindungsgemäße Partikelschaumformteile weisen bevorzugt eine Druckfestigkeit in alle drei Raumrichtungen von mindestens 100 kPa, bevorzugt mindestens 300 kPa, insbesondere mindestens 400 kPa, auf.

Partikelschaumformteile aus dem erfindungsgemäß hergestellten Granulat weisen im Allgemeinen eine Dichte von 15 bis 300 g/l auf, bevorzugt von 50 bis 200 g/l, besonders bevorzugt von 70 bis 150 g/l. Bevorzugt weisen die Formteile eine maximale Dimensionsänderung von maximal 3 % bei thermischer Belastung von mindestens 130°C auf. Solche Partikelschaumformteile weisen eine Zellzahl im Bereich 1 bis 30 Zellen pro mm, bevorzugt von 3 bis 20 Zellen pro mm, insbesondere von 3 bis 25 Zellen pro mm auf. Die erfindungsgemäßen Partikelschaumformteile weisen eine hohe Geschlossenzelligkeit auf, wobei in der Regel mehr als 60%, bevorzugt mehr als 70%, besonders bevorzugt mehr als 80% der Zellen der einzelnen Schaumpartikel geschlossenzellig sind (bestimmt nach ISO 4590).

Die erfindungsgemäßen Schäume und Formteile finden vorzugsweise Verwendung als Isolationsmaterial für technische Anwendungen und den Baubereich oder als Schaumelement für Leichtbau- und Verbundanwendungen, beispielsweise in Automobilanwendungen und Windkraftanlagen, insbesondere in Rotorblättern solcher Windkraftanlagen.

Neben diesen und den oben genannten Verwendungen ist eine Verwendung für Verbundformteile im Möbelbau bevorzugt. Zu diesem Zweck wird auf die erfindungsgemäßen Schaumformteile, welche in Form einer Schaumplatte vorliegen, nach bekannten, dem Fachmann geläufigen Methoden mindestens eine weitere Schicht aufgebracht.

Neben einer ersten Schicht aus der beschriebenen Schaumplatte enthalten derartige Verbundformteile somit mindestens eine weitere Schicht. Bevorzugt ist die erste Schicht wenigstens auf zwei Flächen mit einer oder mehreren weiteren Schichten verbunden. Weiterhin bevorzugt ist die erste Schicht auf mindestens zwei Flächen (im Fall eines rechtwinkligen Querschnitts oben und unten), ebenso bevorzugt sind alle Flächen mit einer oder mehreren weiteren Schichten verbunden.

In einer Ausführungsform der Erfindung besteht der Aufbau des Verbundformteils aus einer oder mehreren Kernschichten, einer oder mehreren Deckschichten und einer Oberflächenschicht.

In einer weiteren Ausführungsform der Erfindung besteht der Aufbau des Verbundformteils aus einer Kernschicht und einer Oberflächenschicht.

Zur Beplankung als Oberflächen- und gegebenenfalls Deckschicht sind beispielsweise Aminoplastharzfilme, insbesondere Melaminfilme, PVC (Polyvinylchlorid), Glasfaserverstärkter Kunststoff (GFK), beispielsweise ein Verbund aus Polyesterharz, Epoxiharz, oder Polyamid und Glasfasern, Vorimprägnate, Folien, Laminate, beispielsweise HPL (high pressure laminate) und CPL (continuous pressure laminate), Furniere, und Metall-, insbesondere Aluminium- oder Bleibeschichtungen, geeignet. Weiterhin geeignet sind Gewebe und Vliesstoffe, insbesondere aus Natur- und/oder Kunstfasern.

Weiterhin kommen für eine Beplankung der erfindungsgemäßen Verbundformteile(n) alle Werkstoffe in Betracht, die aus Holzstreifen, Holzfasern, Holzspänen, Hölzern, Holzfurnieren, verleimten Hölzern, Furnieren oder einer Kombination der entsprechenden Herstellungsverfahren gefertigt sind. Ebenfalls bevorzugt ist eine Beplankung der erfindungsgemäßen Formteile(n) mit OSB, Spanplatten, HDF (hochdichte Faserplatten) oder MDF (mitteldichten Faserplatten), insbesondere dünnen Spanplatten, HDF und MDF mit einer Dicke von 2 bis 10 mm.

Als Klebstoffe können übliche Materialien, beispielsweise Dispersionsklebstoffe z.B. Weißleim, Epoxidharze, Formaldehyd-Kondensationsharze, wie Phenolharze, Harn-stoff-Formaldehyd-Harze, Melamin-Formaldehyd-Harze, Melamin-Harnstoff-Formaldehyd-Harze, Resorcin- und Phenolresorcinharze, Isocyanatklebstoffe, Polyurethanklebstoffe und Schmelzkleber verwendet werden.

Die Erfindung wird durch die Beispiele näher erläutert, ohne sie dadurch beschränken zu wollen.

### Beispiele:

Einsatzstoffe:
- Luran^{®} HH120: AMSAN mit einem Acrylnitrilgehalt von 31 Gew.-% und einer Viskositätszahl von 57 ml/g(Handelsprodukt der BASF SE)
- Luran^{®} 3380: SAN mit einem Acrylnitrilgehalt von 33 Gew.-% und einer Viskositätszahl von 80 ml/g (Handelsprodukt der BASF SE)
- Luran^{®} 2580: SAN mit einem Acrylnitrilgehalt von 25 Gew.-% und einer Viskositätszahl von 80 ml/g (Handelsprodukt der BASF SE)
- Talkum: Talkum IT Extra, Luzenac Pharma
- 158 K: Polystyrol mit einer Viskositätszahl von 93 - 98 ml/g (Handelsprodukt der BASF SE)
- Tinuvin^{®} 234: 2-(2H-Benzotriazol-2-yl)-4,6-bis(1-methyl-1-phenylethyl)phenol, UV-Absorber (Handelsprodukt der BASF SE)

Polyphenylenether: PX 100F (Mitsubishi Engineering Plastics)
Styrol-co-Maleinsäureanhydrid (SMA): Xiran 26080 (Polyscope)
Styrol-co-Maleinsäureanhydrid (SMA): Xiran 28065 (Polyscope)
Styrol-co-N-Phenylmaleinimid (SPMI): Denka IP (Denka)

### Herstellung der expandierbaren Granulate auf einer Labor-Anlage (Extrusionsprozess)

Die Herstellung der expandierbaren Granulate erfolgte nach einem Schmelzimprägnierverfahren. Dazu wurden zunächst die Polymere in einem Extruder plastifiziert (Leistritz, Schneckendurchmesser 18 mm, Drehzahl 150 Upm). Die Schmelze wurde im Extruder mit technischem s-Pentan (80 % n-Pentan / 20 % iso-Pentan) und ggf. anderen Treibmitteln wie Aceton imprägniert und homogenisiert. Die entsprechenden Rezepturen sind der Tabelle zu entnehmen. Durch eine Schmelzepumpe am Extruderkopf wurde Druck aufgebracht, um das Material über eine Lochplatte (2 Löcher à 0.65 mm) mit einer drucküberlagerten Unterwassergranulierung zu granulieren (Wasserdruck siehe Tabelle, Wassertemperatur 60 °C). Die mittlere Partikelgröße betrug ca. 1.25 mm. Der Gesamtdurchsatz betrug 4.5 kg/h. Die gemessene Schmelzetemperatur am Düsenaustritt lag bei ca. 225 °C, die maximale Schmelzetemperatur entlang der gesamten Verfahrensstrecke betrug 240-250 °C. Die mittlere Verweilzeit betrug ca. 2.5 min.

### Herstellung der expandierbaren Granulate auf der Labor-Anlage (Mischerprozess)

Die Herstellung der expandierbaren Granulate erfolgte nach einem Schmelzeimprägnierverfahren unter Verwendung statischer Mischapparate. Dazu wurden zunächst die Polymere in einem Extruder plastifiziert (Berstorff ZE40, Drehzahl 200 Upm) und über eine Schmelzepumpe in eine Serie von statischen Mischern und Wärmetauschern dosiert. Am Eingang des ersten statischen Mischers wird technisches s-Pentan (80 % n-Pentan / 20 % iso-Pentan) zugegeben und die Schmelze imprägniert. Die entsprechenden Rezepturen sind der Tabelle zu entnehmen. Anschließend wurde die Schmelzetemperatur über einen Wärmetauscher reduziert und die Schmelzetemperatur über einen weiteren statischen Mischer homogenisiert. Durch eine Schmelzepumpe am Extruderkopf wurde Druck aufgebracht, um das Material über eine Lochplatte (70 Löcher à 0.7 mm) mit einer drucküberlagerten Unterwassergranulierung zu granulieren (Wasserdruck siehe Tabelle, Wassertemperatur 70 °C). Die mittlere Partikelgröße betrug ca. 1.20 mm. Der Gesamtdurchsatz betrug 60 kg/h. Die gemessene Schmelzetemperatur am Düsenaustritt lag bei ca. 210 °C, die maximale Schmelzetemperatur entlang der gesamten Verfahrensstrecke betrug ca. 255 °C. Die mittlere Verweilzeit betrug ca. 15 min.

### Verarbeitung und Charakterisierung der expandierbaren Granulate

Als Beschichtungskomponenten wurde 60 Gew.-% Gycerintristearat (GTS), 30 Gew.-% Glycerinmonostearat (GMS) und 10 Gew.-% Zinkstearat verwendet, die nach der Granulierung auf das Material aufgebracht wurden.

Das treibmittelhaltige Granulat wurde in einem Druckvorschäumer bei bis zu 2.3 bar (absolut) zu Schaumperlen mit einer Dichte von 100 - 120 g/L vorgeschäumt. Anschließend wurden vorgeschäumten Granulate nach einer Zwischenlagerzeit von 12 h in einem EPP-Formteilautomaten bei bis zu 3 bar (absolut) zu Formteilen verarbeitet. Typische Verarbeitungsparameter wie die Vorschäumzeit und die Entformzeit sind in den folgenden Tabellen dargestellt.

An den Formteilen wurden verschiedene mechanische Messungen durchgeführt, u.a. wurde die Druckeigenschaften nach DIN EN 826 und die Biegefestigkeit nach DIN EN 12089 bestimmt. Die Biegearbeit wurde aus den Messwerten zur Biegefestigkeit ermittelt. Die Warmformbeständigkeiten der Materialien wurden nach DIN EN 1604 bestimmt.

Die Glasübergangstemperaturen wurden nach DIN ISO 11357-2 bei einer Heizrate von 20 K/min unter Schutzgasatmosphäre (N2) bestimmt.

**Tabelle 1: Referenzbeispiele für Extruderprozess**

| | | | Beispiel 1 | Beispiel 2 | Beispiel 3 | Beispiel 4 | Beispiel 5 | Beispiel 6 |
|---|---|---|---|---|---|---|---|---|
| A1) | SMA | Xiran SZ 26080, Polyscope | 100 | | | | | 100 |
| | | Xiran SZ 28065, Polyscope | | 100 | 100 | 80 | 40 | |
| A2) | SAN | Luran 2580, BASF | | | | 20 | 60 | |
| A3) | | | | | | | | |
| B1) | Treibmittel | s-Pentan | 4 | 4 | 3 | 4 | 4 | 4 |
| B2) | | Aceton | | | 1 | | | |
| C1) | Talkum | IT Extra | 0.5 | 0.5 | 0.5 | 0.5 | 0.5 | 0.5 |
| C2) | Stabilisator | Tinuvin 234 | | | | | | 0.2 |
| Maximale Schmelztemperatur bei Herstellung (°C) | | | 250 | 250 | 245 | 245 | 250 | 250 |
| Glasübergangstemperatur (°C) | | | 158 | 160 | 160 | 149 | 132 | 157 |
| Wasseranteil nach Beschichtung (Gew.-%) | | | < 0.5 | < 0.5 | < 0.5 | < 0.5 | < 0.3 | < 0.5 |
| Vorschäumdruck (bar) | | | 2.3 | 2.3 | 2.3 | 2.0 | 1.7 | 2.3 |
| Max. Vorschäumtemperatur (°C) | | | 135 | 135 | 135 | 130 | 125 | 135 |
| Vorschäumzeit (s) | | | 50 | 55 | 64 | 60 | 57 | 50 |
| Schüttdichte nach dem Vorschäumen (g/l) | | | 96 | 112 | 112 | 106 | 111 | 96 |
| Schäumdruck Formteilherstellung (s) | | | 3.0 | 3.0 | 3.0 | 2.7 | 2.3 | 3.0 |
| Zykluszeit Formteilherstellung (s) | | | 415 | 415 | 415 | 415 | 415 | 415 |
| Dichte Formteil (g/l) | | | 98 | 117 | 114 | 110 | 112 | 96 |
| Druckfestigkeit (MPa) - DIN EN 826 | | | 1.1 | 1.3 | 1.3 | 1.2 | 1.2 | 1.1 |
| Biegefestigkeit (MPa) | | | 1.2 | 1.4 | 1.6 | 1.3 | 1.2 | 1.2 |
| Warmformbeständigkeit (°C) - DIN 1604 Dimensionsänderung < 3% bei Temperatur | | | ≥ 150 | ≥ 150 | > 150 | ≥ 140 | > 120 | ≥ 150 |

**Tabelle 2: Referenzbeispiele für Mischerprozess**

| | | | Beispiel 7 | Beispiel 8 |
|---|---|---|---|---|
| A1) | SMA | Xiran SZ 26080, Polyscope | 100 | |
| | | Xiran SZ 28065, Polyscope | | 40 |
| A2) | SAN | Luran 2580, BASF | | 60 |
| A3) | | | | |
| B1) | Treibmittel | s-Pentan | 4 | 4 |
| B2) | | Aceton | | |
| C1) | Talkum | IT Extra | 0.5 | 0.5 |
| C2) | Stabilisator | Tinuvin 234 | 0.2 | 0.2 |
| Maximale Schmelzetemperatur bei Herstellung (°C) | | | 255 | 255 |
| Glasübergangstemperatur (°C) | | | 157 | 131 |
| Wasseranteil nach Beschichtung (Gew.-%) | | | < 0.5 | <0.3 |
| Vorschäumdruck (bar) | | | 2.3 | 1.7 |
| Max. Vorschäumtemperatur (°C) | | | 135 | 125 |
| Vorschäumzeit (s) | | | 50 | 57 |
| Schüttdichte nach dem Vorschäumen (g/l) | | | 98 | 109 |
| Schäumdruck Formteilherstellung (s) | | | 3.0 | 2.3 |
| Zykluszeit Formteilherstellung (s) | | | 415 | 415 |
| Dichte Formteil (g/l) | | | 98 | 113 |
| Druckfestigkeit (MPa) - DIN EN 826 | | | 1.1 | 1.1 |
| Biegefestigkeit (MPa) - DIN EN 12089 | | | 1.2 | 1.2 |
| Warmformbeständigkeit (°C) - DIN 1604 Dimensionsänderung < 3% bei angegebener Temperatur | | | ≥ 150 | ≥ 120 |

## Patentansprüche

1. Verfahren zur Herstellung eines expandierbaren Polymergranulats, umfassend die Schritte
a) Bereitstellen einer Polymerkomponente (P), bestehend aus
PS) 90 bis 99,9 Gew.-% (bezogen auf P) einer Styrolpolymerkomponente mit einer Glasübergangstemperatur ≥ 130 °C, die gebildet ist aus
PS1) 30 bis 100 Gew.-% (bezogen auf P) an einem oder mehreren Styrolpolymeren, enthaltend
PS11) 60 bis 85 Gew.-% (bezogen auf PS1) einpolymerisiertes Styrol (PS11) oder alpha-Methylstyrol (PS12) oder eine einpolymerisierte Mischung aus alpha-Methylstyrol und Styrol (PS13),
PS12) 15 bis 40 Gew.-% (bezogen auf PS1) mindestens eines einpolymerisierten Monomers aus der Gruppe Maleinsäureanhydrid und Maleinimide und PS2) 0 bis 70 Gew.-% (bezogen auf P) an einem oder mehreren von PS1 unterschiedlichen Stryolpolymeren, enthaltend
PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22) 18 bis 40 Gew.-% (bezogen auf PS2) einpolymerisiertes Acrylnitril
und
PT) 0,1 bis 10 Gew.-% (bezogen auf P) an einem oder mehreren thermoplastischen Polymeren aus der Gruppe bestehend aus aromatischen Polyethern; Polyolefinen; Polyacrylaten; Polycarbonaten (PC); Polyestern; Polyamiden; Polyethersulfonen (PES); Polyetherketonen (PEK) und Polyethersulfiden (PES),
(b) Erhitzen der Polymerkomponente (P) zur Ausbildung einer Polymerschmelze,
(c) Einbringen von 1 bis 5 Gew.-% (bezogen auf P) einer Treibmittelkomponente (T), in die Polymerschmelze zur Ausbildung einer schäumbaren Schmelze, wobei als Treibmittel C₃ - C₈ - Kohlenwasserstoffe und Mischungen daraus eingesetzt werden,
(d) Homogenisieren der Mischung,
(e) gegebenenfalls Zugabe von Additiven zu der Polymerkomponente P in mindestens einem der Schritte a), b), c) und/oder d),
(f) Extrusion der treibmittelhaltigen Polymerschmelze durch eine Düsenplatte,
(g) Granulieren der treibmitteilhaltigen Schmelze in einer flüssigkeitsgefüllten Kammer unter einem Druck von 1,5 bis 15 bar zu einem Granulat.

2. Verfahren nach Anspruch 1, **dadurch gekennzeichnet, dass** die expandierbaren Granulatpartikel eine mittlere Partikelgröße von 0,2 bis 2,5 mm aufweisen.

3. Verfahren nach Anspruch 2, **dadurch gekennzeichnet, dass** maximal 5 Gew.-% der Partikel kleiner als 0,8-mal der mittleren Partikelgröße und maximal 5 Gew.-% größer als 1,2-mal der mittleren Partikelgröße sind.

4. Verfahren nach einem der Ansprüche 1 bis 3, wobei die Komponente PS1) aus Styrol und Maleinsäureanhydrid besteht.

5. Verfahren einem der Ansprüche 1 bis 3, wobei die Komponente PS1) aus Styrol und Phenylmaleinimid besteht.

6. Verfahren nach einem der Ansprüche 1 bis 3, wobei die Komponente PS1) aus Styrol, Maleinsäureanhyrid und Phenylmaleinimid besteht.

7. Verfahren einem der Ansprüche 1 bis 6, wobei die Komponente PS2) aus Styrol und Acrylnitril besteht.

8. Verfahren einem der Ansprüche 1 bis 6, wobei die Komponente PS2) aus Styrol, Acrylnitril und Maleinsäureanhyrid besteht.

9. Verfahren nach einem der Ansprüche 1 bis 8, wobei die Menge der eingebrachten Treibmittelkomponente (T) weniger als 4 Gew.-% (bezogen auf P)beträgt.

10. Verfahren nach einem der Ansprüche 1 bis 9, wobei als Co-Treibmittel Ketone und/oder Alkohole eingesetzt werden.

11. Verfahren nach einem der Ansprüche 1 bis 9, wobei als Co-Treibmittel Aceton eingesetzt wird.

12. Verfahren nach einem der Ansprüche 1 bis 11, wobei als Additiv ein oder mehrere UV-Stabilisatoren zugesetzt werden.

13. Verfahren nach einem der Ansprüche 1 bis 12, wobei die flüssigkeitsgefüllte Kammer bei einer Temperatur im Bereich von 20 bis 95°C betrieben wird.

14. Expandierbares Granulat, erhältlich nach dem Verfahren gemäß einem der Ansprüche 1 bis 13, dessen Partikel jeweils mindestens 10 Hohlräume pro mm³ im Größenbereich von 1 bis 200 µm enthalten und das eine Polymerkomponente (P) enthält, bestehend aus
PS) 90 bis 99,9 Gew.-% (bezogen auf P) einer Styrolpolymerkomponente mit einer Glasübergangstemperatur ≥ 130 °C, bestehend aus PS1
) 30 bis 100 Gew.-% (bezogen auf P) an einem oder mehreren Styrolpolymeren, enthaltend jeweils
PS11) 60 bis 85 Gew.-% (bezogen auf PS1) einpolymerisiertes Styrol (PS111) oder alpha-Methylstyrol (PS112) oder eine einpolymerisierte Mischung aus alpha-Methylstyrol und Styrol (PS113),
PS12) 15 bis 40 Gew.-% (bezogen auf PS1) mindestens eines einpolymerisierten Monomers aus der Gruppe Maleinsäureanhydrid und Maleinimide und
PS2) 0 bis 70 Gew.-% (bezogen auf P) an einem oder mehreren von PS1 unterschiedlichen Stryolpolymeren, enthaltend
PS21) 60 bis 82 Gew.-% (bezogen auf PS2) einpolymerisiertes Styrol (PS11) oder alpha-Methylstyrol (PS12) oder eine einpolymerisierte Mischung aus Styrol und alpha-Methylstyrol (PS13) und
PS22) 18 bis 40 Gew.-% (bezogen auf PS2) einpolymerisiertes Acrylnitril und
PT) 0,1 bis 10 Gew.-% (bezogen auf P) an einem oder mehreren thermoplastischen Polymeren aus der Gruppe bestehend aus aromatischen Polyethern, Polyolefinen, Polyacrylaten, Polycarbonaten (PC), Polyestern, Polyamiden, Polyethersulfonen (PES), Polyetherketonen (PEK) und Polyethersulfiden (PES).

15. Formteile erhältlich aus dem expandierbaren Granulat nach Anspruch 14, **dadurch gekennzeichnet, dass** es eine Dichte von 15 bis 300 g/l und eine maximale Dimensionsänderung von maximal 3 % bei thermischer Belastung von mindestens 130°C aufweist.

16. Verbundformkörper, enthaltend ein Formteil gemäß Anspruch 15.

17. Verwendung eines Formteils gemäß Anspruch 16 oder eines Verbundkörpers gemäß Anspruch 16 als Isolationsmaterial für technische Anwendungen und den Baubereich oder als strukturelles Schaumelement für Leichtbau und Verbundanwendungen in der Bauindustrie, in Windkraftanlagen, der Automobilindustrie, im Boots- und Schiffsbau, im Möbelbau und dem Messebau.

## Claims

1. A process for producing an expandable pelletized polymeric material, comprising the steps of:
a) providing a polymer component (P), consisting of
PS) 90% to 99.9% by weight (based on P) of a styrene polymer component having a glass transition temperature of ≥ 130°C, formed from
PS1) 30% to 100% by weight (based on P) of one or more styrene polymers comprising
PS11) 60% to 85% by weight (based on PS1) of polymerized styrene (PS11) or alpha-methylstyrene (PS12) or of a polymerized mixture of alpha-methylstyrene and styrene (PS13),
PS12) 15% to 40% by weight (based on PS1) of one or more than one polymerized monomer selected from the group consisting of maleic anhydride and maleimides and
PS2) 0% to 70% by weight (based on P) of one or more styrene polymers other than PS1, comprising
PS21) 60% to 82% by weight (based on PS2) of polymerized styrene (PS11) or alpha-methylstyrene (PS12) or of a polymerized mixture of styrene and alpha-methylstyrene (PS13), and
PS22) 18% to 40% by weight (based on PS2) of polymerized acrylonitrile
and
PT) 0.1% to 10% by weight (based on P) of one or more thermoplastic polymers selected from the group consisting of aromatic polyethers; polyolefins; polyacrylates; polycarbonates (PC); polyesters; polyamides; polyether sulfones (PES); polyether ketones (PEK) and polyether sulfides (PES),
(b) heating the polymer component (P) to form a polymer melt,
(c) introducing from 1% to 5% by weight (based on P) of a blowing agent component (T) into the polymer melt to form a foamable melt, wherein C₃-C₈, hydrocarbons and mixtures thereof are used as blowing agents,
(d) homogenizing the mixture,
(e) optionally adding additives to the P polymer component in one or more of steps a), b), c) and/or d),
(f) extruding the blowing agent-containing polymer melt through a die plate,
(g) pelletizing the blowing agent-containing melt in a liquid-filled chamber under a pressure of 1.5 to 15 bar to form a pelletized material.

2. The process according to claim 1 wherein the expandable pellets have an average size in the range from 0.2 to 2.5 mm.

3. The process according to claim 2 wherein not more than 5% by weight of the pellets are less than 0.8 times the average pellet size and not more than 5% by weight are greater than 1.2 times the average pellet size.

4. The process according to any one of claims 1 to 3 wherein the PS1) component consists of styrene and maleic anhydride.

5. The process according to any one of claims 1 to 3 wherein the PS1) component consists of styrene and phenylmaleimide.

6. The process according to any one of claims 1 to 3 wherein the PS1) component consists of styrene, maleic anhydride and phenylmaleimide.

7. The process according to any one of claims 1 to 6 wherein the PS2) component consists of styrene and acrylonitrile.

8. The process according to any one of claims 1 to 6 wherein the PS2) component consists of styrene, acrylonitrile and maleic anhydride.

9. The process according to any one of claims 1 to 8 wherein the amount of introduced blowing agent component (T) is less than 4% by weight (based on P).

10. The process according to any one of claims 1 to 9 wherein ketones and/or alcohols are used as co-blowing agents.

11. The process according to any one of claims 1 to 9 wherein acetone is used as co-blowing agent.

12. The process according to any one of claims 1 to 11 wherein one or more UV stabilizers are added as an additive.

13. The process according to any one of claims 1 to 12 wherein the liquid-filled chamber is operated at a temperature in the range from 20 to 95°C.

14. An expandable pelletized material obtainable according to the process according to any one of claims 1 to 13, where each pellet contains per mm³ 10 or more cavities ranging in size from 1 to 200 µm and which comprises a polymer component (P), consisting of
PS) 90% to 99.9% by weight (based on P) of a styrene polymer component having a glass transition temperature of 130°C, consisting of
PS1) 30% to 100% by weight (based on P) of one or more styrene polymers each comprising
PS11) 60% to 85% by weight (based on PS1) of polymerized styrene (PS111) or alpha-methylstyrene (PS112) or of a polymerized mixture of alpha-methylstyrene and styrene (PS113),
PS12) 15% to 40% by weight (based on PS1) of one or more than one polymerized monomer selected from the group consisting of maleic anhydride and maleimides and
PS2) 0% to 70% by weight (based on P) of one or more styrene polymers other than PS1, comprising
PS21) 60% to 82% by weight (based on PS2) of polymerized styrene (PS11) or alpha-methylstyrene (PS12) or of a polymerized mixture of styrene and alpha-methylstyrene (PS13), and
PS22) 18% to 40% by weight (based on PS2) of polymerized acrylonitrile
and
PT) 0.1% to 10% by weight (based on P) of one or more thermoplastic polymers selected from the group consisting of aromatic polyethers, polyolefins, polyacrylates, polycarbonates (PC), polyesters, polyamides, polyether sulfones (PES), polyether ketones (PEK) and polyether sulfides (PES).

15. A molding obtainable from the expandable pelletized material according to claim 14, **characterized by** a density in the range from 15 to 300 g/l and a maximum dimensional change of not more than 3% on being subjected to a thermal stress of at least 130°C.

16. A molded composite body comprising a molding according to claim 15.

17. The use of a molding according to claim 16 or of a composite body according to claim 16 as insulation material for technical applications and the building sector or as structural foam element for lightweight and composite applications in the building construction industry, in wind power plants, in the automotive industry, in boat and shipbuilding, in furnituremaking and in the exposition industry.

## Revendications

1. Procédé de fabrication d'un granulé polymère expansible, comprenant les étapes
a) mise à disposition d'un composant polymère (P) constitué de
PS) 90 à 99,9 % en poids (par rapport à P) d'un composant polymère du styrène ayant une température de transition vitreuse ≥ 130°C, qui est formé à partir de PS1) 30 à 100 % en poids (par rapport à P) d'un ou plusieurs polymères du styrène, contenant
PS11) 60 à 85 % en poids (par rapport à PS1) de styrène (PS11) ou d'alpha-méthylstyrène (PS12) polymérisé, ou d'un mélange polymérisé d'alpha-méthylstyrène et de styrène (PS13),
PS12) 15 à 40 % en poids (rapport à PS1) d'au moins un monomère polymérisé du groupe de l'anhydride maléique et des maléimides, et
PS2) 0 à 70 % en poids (par rapport à P) d'un ou plusieurs polymères du styrène différents de PS1, contenant
PS21) 60 à 82 % en poids (par rapport à PS2) de styrène (PS11) ou d'alpha-méthylstyrène (PS12) polymérisé, ou d'un mélange polymérisé de styrène et d'alpha-méthylstyrène (PS13) et
PS22) 18 à 40 % en poids (par rapport à PS2) d'acrylonitrile polymérisé,
et
PT) 0,1 à 10 % en poids (par rapport à P) d'un ou plusieurs polymères thermoplastiques du groupe constitué des polyéthers aromatiques ; des polyoléfines ; des polyacrylates ; des polycarbonates (PC) ; des polyesters; des polyamides ; des polyéthersulfones (PES) ; des polyéthercétones (PEK) et des polyéthersulfures (PES),
(b) chauffage du composant polymère (P) pour former un polymère fondu,
(c) introduction de 1 à 5 % en poids (par rapport à P) d'un composant porogène (T), dans le polymère fondu, pour former une masse fondue expansible, auquel cas on utilise en tant qu'agent porogène des hydrocarbures en C₃ à C₈ et des mélanges de ceux-ci,
(d) homogénéisation du mélange,
(e) éventuellement, addition d'additifs au composant polymère P dans au moins l'une des étapes a), b), c) et/ou d),
(f) extrusion, par une plaque de filière, du polymère fondu contenant l'agent porogène,
(g) granulation de la masse fondue contenant un agent porogène, dans une chambre remplie de liquide sous une pression de 1,5 à 15 bar, pour obtenir un granulé.

2. Procédé selon la revendication 1, **caractérisé en ce que** les particules de granulés expansibles ont une granulométrie moyenne de 0,2 à 2,5 mm.

3. Procédé selon la revendication 2, **caractérisé en ce qu'**au maximum 5 % en poids des particules sont plus petites que 0,8 fois la granulométrie moyenne, et qu'au maximum 5 % en poids sont plus grosses que 1,2 fois la granulométrie moyenne.

4. Procédé selon l'une des revendications 1 à 3, dans lequel le composant PS1) est constitué de styrène et d'anhydride maléique.

5. Procédé selon l'une des revendications 1 à 3, dans lequel le composant PS1) est constitué de styrène et de phénylmaléimide.

6. Procédé selon l'une des revendications 1 à 3, dans lequel le composant PS1) est constitué de styrène, d'anhydride maléique et de phénylmaléimide.

7. Procédé selon l'une des revendications 1 à 6, dans lequel le composant PS2) est constitué de styrène et d'acrylonitrile.

8. Procédé selon l'une des revendications 1 à 6, dans lequel le composant PS2) est constitué de styrène, d'acrylonitrile et d'anhydride maléique.

9. Procédé selon l'une des revendications 1 à 8, dans lequel la quantité du composant porogène introduit (T) est inférieure à 4 % en poids (par rapport à P).

10. Procédé selon l'une des revendications 1 à 9, dans lequel on utilise en tant que co-agent porogène des cétones et/ou des alcools.

11. Procédé selon l'une des revendications 1 à 9, dans lequel on utilise en tant que co-agent porogène de l'acétone.

12. Procédé selon l'une des revendications 1 à 11, dans lequel on ajoute en tant qu'additif un ou plusieurs stabilisants UV.

13. Procédé selon l'une des revendications 1 à 12, dans lequel la chambre remplie de liquide est exploitée à une température comprise dans la plage de 20 à 95°C.

14. Granulé expansible pouvant être obtenu par le procédé selon l'une des revendications 1 à 13, dont les particules contiennent chacune au moins 10 pores par mm³, ayant une grosseur comprise dans la plage de 1 à 200 µm, et qui contient un composant polymère (P), constitué de
PS) 90 à 99,9 % en poids (par rapport à P) d'un composant polymère du styrène ayant une température de transition vitreuse ≥ 130°C, qui est formé à partir de PS1) 30 à 100 % en poids (par rapport à P) d'un ou plusieurs polymères du styrène, contenant
PS11) 60 à 85 % en poids (par rapport à PS1) de styrène (PS111) ou d'alpha-méthylstyrène (PS112) polymérisé, ou d'un mélange polymérisé d'alpha-méthylstyrène et de styrène (PS113),
PS12) 15 à 40 % en poids (rapport à PS1) d'au moins un monomère polymérisé du groupe de l'anhydride maléique et des maléimides, et
PS2) 0 à 70 % en poids (par rapport à P) d'un ou plusieurs polymères du styrène différents de PS1, contenant
PS21) 60 à 82 % en poids (par rapport à PS2) de styrène (PS11) ou d'alpha-méthylstyrène (PS12) polymérisé, ou d'un mélange polymérisé de styrène et d'alpha-méthylstyrène (PS13) et
PS22) 18 à 40 % en poids (par rapport à PS2) d'acrylonitrile polymérisé,
et
PT) 0,1 à 10 % en poids (par rapport à P) d'un ou plusieurs polymères thermoplastiques du groupe constitué des polyéthers aromatiques ; des polyoléfines ; des polyacrylates ; des polycarbonates (PC) ; des polyesters ; des polyamides ; des polyéthersulfones (PES) ; des polyéthercétones (PEK) et des polyéthersulfures (PES).

15. Objets moulés pouvant être obtenus à partir du granulé expansible selon la revendication 14, **caractérisés en ce qu'**il présente une masse volumique de 15 à 300 g/l et une déformation maximale de 3 % en présence d'une contrainte thermique d'au moins 130°C.

16. Corps moulés composites contenant une pièce moulée selon la revendication 15.

17. Utilisation d'une pièce moulée selon la revendication 16 ou d'un corps composite selon la revendication 16 en tant que matériau isolant pour applications techniques et pour le domaine du bâtiment, ou en tant qu'élément mousse structurel pour la construction légère, et pour les applications de composites dans l'industrie du bâtiment, dans les installations éoliennes, dans l'industrie automobile, dans la construction de bateaux et dans la construction navale, dans la construction de meubles et dans la construction de matériels d'exposition.
